# EUROPEAN PATENT APPLICATION

(11) **EP 3 222 970 A1**
(43) Date of publication of application: **27.09.2017**
(21) Application number: 14906247.3
(22) Date of filing: 17.11.2014
(51) Int. Cl.: G01C 21/26, B61L 25/04, G06Q 50/10, G08G 1/005, G08G 1/123, G08G 1/127

(54) **TRAFFIC FLOW CONTROL SYSTEM AND TRAFFIC FLOW CONTROL METHOD**

(71) Applicant: Hitachi, Ltd., Tokyo 100-8280 (JP)
(72) Inventor: HASEGAWA, Takashi, Tokyo 100-8280 (JP); MAEKI, Akira, Tokyo 100-8280 (JP); IKEGAYA, Kazuhiro, Tokyo 100-8280 (JP)
(74) Representative: Gill, Stephen Charles
(86) International application number: PCT/JP2014/080316
(87) International publication number: WO 2016/079778

(57) **Abstract**

It is provided a traffic flow control system (100), comprising a processor (101) and a memory (102), the memory holds a waiting condition (190) in which a condition for selecting a waiting location for the user is recorded being configured to held, a processor being configured to: select a waiting location suited to the user by referring to the waiting condition in a case of occurring trouble of a transportation facility (S103); transmit information on the selected waiting location to a terminal of the user (S127); determine a time for transmitting the information on restoration from the trouble in accordance with a required time of travel from the waiting location of the user to a station in a case of restoring from the trouble (S109); and transmit a notification of the information on restoration from the trouble to the terminal of the user at the determined time (S136, S137).

## Description

### BACKGROUND OF THE INVENTION

This invention relates to a traffic flow control system configured to control a traffic flow by providing information to a user of a transportation facility.

In a case where trouble occurs in a transportation facility, a station becomes crowded with users. After the trouble has been corrected, the users flood onto the transportation facility.

JP 2006-4100 A is the related art in this technical field. In JP 2006-4100 A, there is described an operation management system configured to provide information on a service that can be received by a user while he or she is waiting until train operation starts.

### SUMMARY OF THE INVENTION

In the operation management system described in JP 2006-4100 A, information is distributed to a terminal in accordance with an intention of the user. However, the method of selecting a waiting location suited to the user's taste is not described. Further, in JP 2006-4100 A, there is no consideration given to an urgency degree of travel by the user. In general, the user of the transportation facility inputs the urgency degree of travel in a route search before boarding. Therefore, the system can use that information to send appropriate notifications to the user without requiring confirmation of the intention of the user again when an accident has occurred. In JP 2006-4100 A, there is also no consideration given to avoiding crowding immediately after operation has started by notifying of restoration from the traffic trouble, and no consideration is given to the intention of the user when boarding after the restoration.

In such an operation management system, it is necessary to effectively reduce crowding in and around the station by increasing the utilization rate of the system by the users of the transportation facility. Therefore, there is a need for a system that is easier for the users to use, is readily accepted by the users, and is configured to recommend a waiting location suited to the tastes of the users.

The representative one of inventions disclosed in this application is outlined as follows. There is provided a traffic flow control system (100), which is configured to provide information to a user of a transportation facility, the traffic flow control system comprising: a processor (101) configured to execute a program; a memory (102) accessible by the processor; and a communication interface (104) coupled to the processor. The memory is configured to hold a waiting condition (190) in which a condition for selecting a waiting location for the user is recorded. The processor is configured to: select a waiting location suited to the user by referring to the waiting condition in a case of receiving information on trouble that has occurred in the transportation facility (S103); urge the user to wait by transmitting information on the selected waiting location to a terminal of the user (S127); determine a time for transmitting the information on restoration from the trouble in accordance with a required time of travel from the waiting location of the user to a station in a case of receiving information on restoration from the trouble that has occurred in the transportation facility (S109); transmit a notification of the information on restoration from the trouble to the terminal of the user at the determined time (S136, S137).

According to the representative embodiment of this invention, crowding in and around the station can be reduced by increasing the utilization rate of the system by the users of the transportation facility. Problems to be solved by this invention, configurations, and advantageous effects other than those described above according to this invention are made clear based on the following description of embodiments of this invention.

### BRIEF DESCRIPTION OF THE DRAWINGS

FIG. 1 is a block diagram for illustrating a logical configuration of a traffic flow control system according to a first embodiment of this invention.
FIG. 2 is a block diagram for illustrating a physical configuration of the traffic flow control system according to the first embodiment.
FIG. 3 is a diagram for illustrating an example of a configuration of shop information according to the first embodiment.
FIG. 4 is a diagram for illustrating an example of a configuration of trouble information according to the first embodiment.
FIG. 5 is a diagram for illustrating an example of a configuration of restoration information of the first embodiment.
FIG. 6 is a diagram for illustrating an example of a configuration of user waiting information according to the first embodiment.
FIG. 7 is a diagram for illustrating an example of a configuration of destination information and waiting condition according to the first embodiment.
FIG. 8 is a sequence diagram for illustrating processing executed by the traffic flow control system according to the first embodiment.
FIG. 9 is a flowchart for illustrating details of waiting location assignment processing according to the first embodiment.
FIG. 10 is a flowchart for illustrating details of restoration notification processing according to the first embodiment.
FIG. 11 is a flowchart of detour route presentation processing according to the first embodiment.
FIG. 12 is a diagram for illustrating an example of a destination and waiting condition input screen according to the first embodiment.
FIG. 13 is a diagram for illustrating an example of a shop information notification screen according to the first embodiment.
FIG. 14 is a schematic diagram of a bus stop of the first embodiment.
FIG. 15A is a schematic diagram of a bus stop according to the first embodiment.
FIG. 15B is a schematic diagram of a signage apparatus installed at the bus stop of the first embodiment.
FIG. 16 is a sequence diagram for illustrating basic processing according to a second embodiment of this invention.
FIG. 17 is a diagram for illustrating an example of a countermeasure determination standard according to the second embodiment.
FIG. 18 is a diagram for showing an example of a countermeasure list according to the second embodiment.
FIG. 19 is a sequence diagram for illustrating an example of specific processing performed when a trouble has occurred in a transportation facility according to the second embodiment.
FIG. 20 is a sequence diagram for illustrating an example of processing when an event occurs according to the second embodiment.

### DETAILED DESCRIPTION OF THE PREFERRED EMBODIMENTS

### <First Embodiment>

First, a first embodiment of this invention is described.

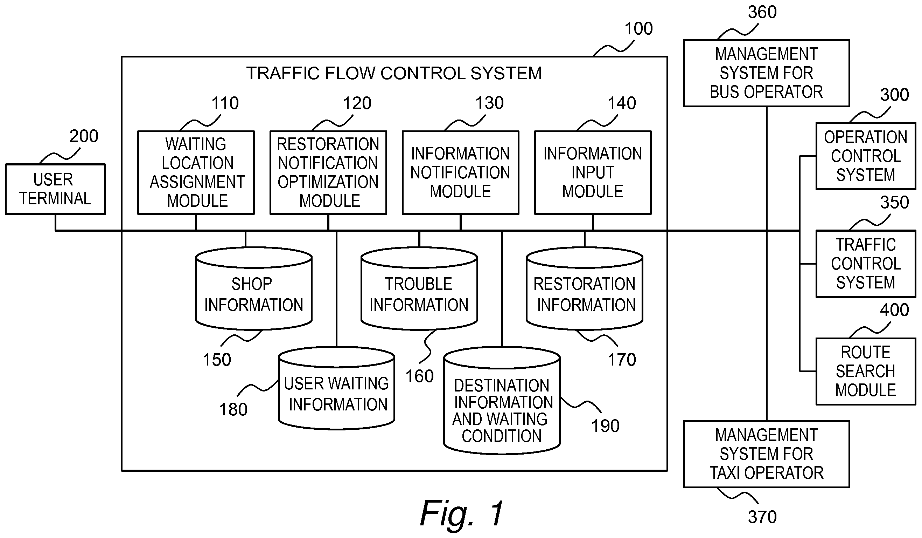

FIG. 1 is a block diagram for illustrating a logical configuration of a traffic flow control system 100 according to the first embodiment.

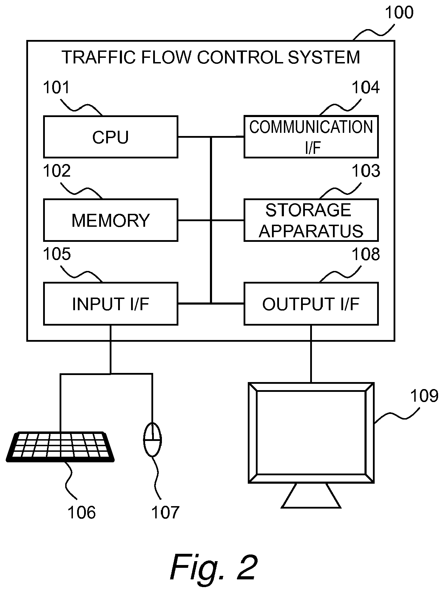

The traffic flow control system 100 according to the first embodiment is an information provision system configured to provide information to a user of a transportation facility, namely, is a waiting location assignment system configured to assign a waiting location to the user in a case where trouble has occurred in the transportation facility, and to provide guidance on the assigned waiting location to the user. Specifically, the traffic flow control system 100 includes a waiting location assignment module 110, a restoration notification optimization module 120, an information notification module 130, and an information input module 140. Those functional modules are implemented by a processor 101 illustrated in FIG. 2 executing programs stored in a memory 102.

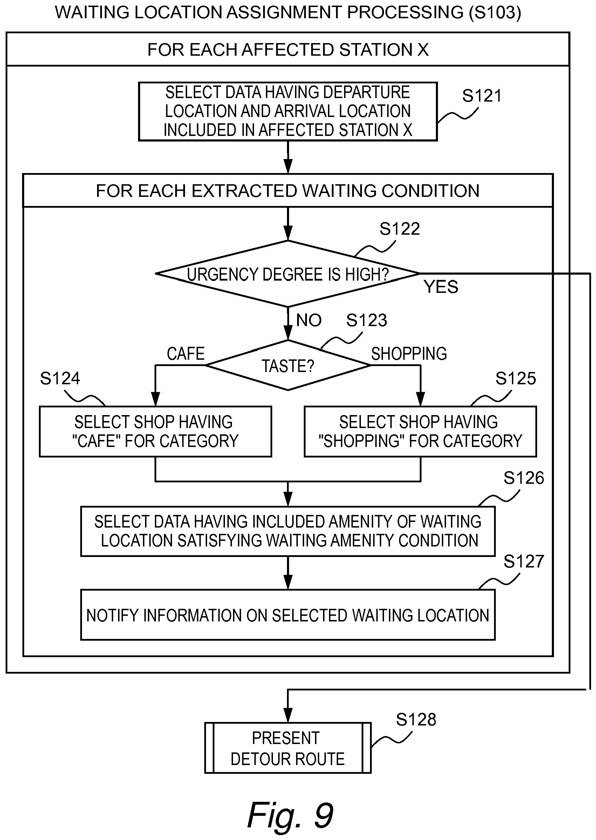

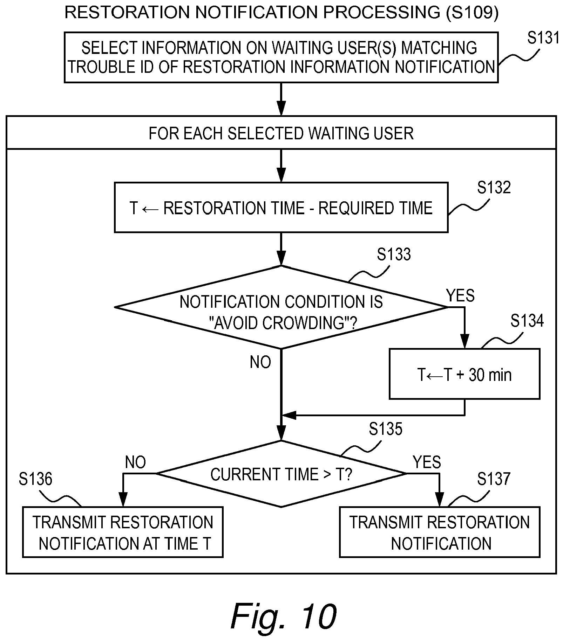

The waiting location assignment module 110 is configured to execute waiting location assignment processing for selecting a waiting location suited to the user as illustrated in FIG. 9. The restoration notification optimization module 120 is configured to execute restoration notification processing for transmitting a restoration notification to a user terminal 200 as illustrated in FIG. 10. The information notification module 130 is configured to notify information on the waiting location to the user terminal 200, and to transmit the restoration notification. The information input module 140 is configured to receive information input from the user terminal 200.

The traffic flow control system 100 also includes shop information 150, trouble information 160, restoration information 170, user waiting information 180, and destination information and waiting condition 190. Those pieces of information and the condition are stored in the memory 102 illustrated in FIG. 2. The information and condition may also be stored in a storage apparatus 103 illustrated in FIG. 2, read from the storage apparatus 103 as necessary, and loaded into the memory 102.

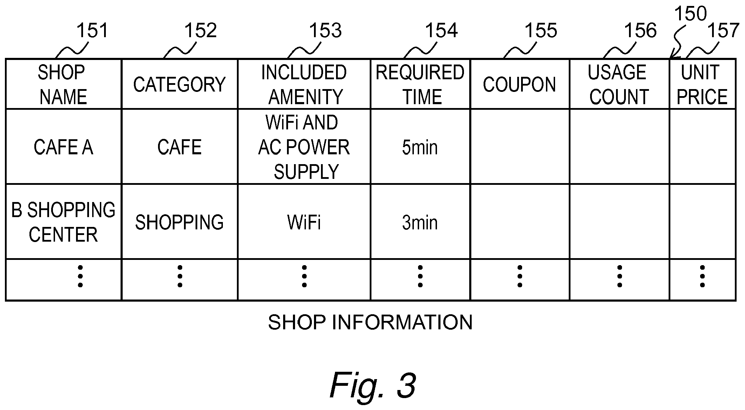

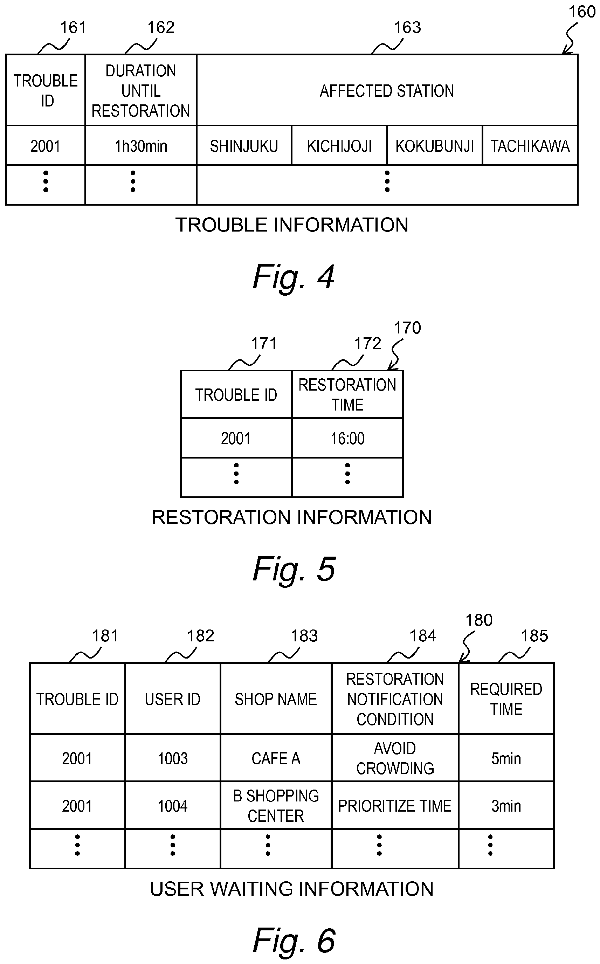

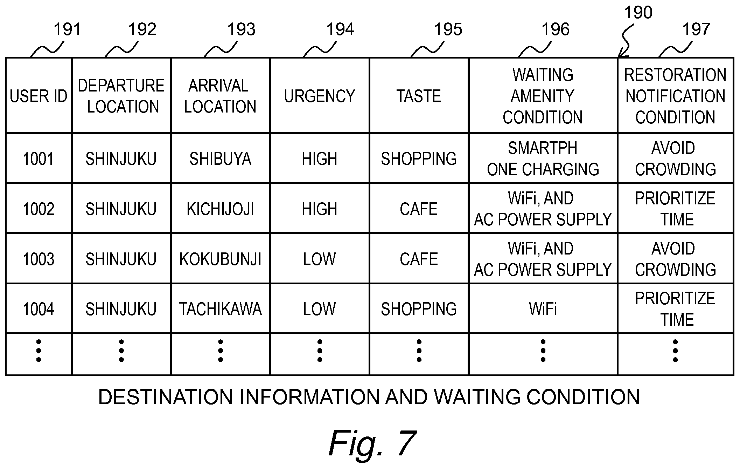

The shop information 150 is a table in which information on a facility (e.g., shop) to serve as a waiting location to which the user is to be guided by the traffic flow control system 100 is recorded. The shop information 150 is described in more detail later with reference to FIG. 3. The trouble information 160 is a table in which information on trouble (for example, delay, cancellation, etc.) that has occurred in the transportation facility is recorded. The trouble information 160 is described in more detail later with reference to FIG. 4. The restoration information 170 is a table in which information on restoration from the trouble that occurred in the transportation facility is recorded. The restoration information 170 is described in more detail later with reference to FIG. 5. The user waiting information 180 is a table in which information on the user guided to the waiting location by the traffic flow control system 100 is recorded. The user waiting information 180 is described in more detail later with reference to FIG. 6. The destination information and waiting condition 190 is a table in which selection conditions of the destination and the waiting location input from the user terminal 200 are recorded. The destination information and waiting condition 190 is described in more detail later with reference to FIG. 7.

The traffic flow control system 100 is coupled to the user terminal 200 via a network (e.g., mobile phone network).

The traffic flow control system 100 is coupled to an operation control system 300 via a network (e.g., local area network (LAN)). The operation control system 300 is a computer system configured to manage and control operation of transportation facilities, for example, trains, and to notify the traffic flow control system 100 of trouble that has occurred in the transportation facility and information on restoration from the trouble. The traffic flow control system 100 may also be configured as a part of the operation control system 300.

The traffic flow control system 100 is also coupled to a route search module 400 via a network (e.g., LAN). The route search module 400 is a computer system configured to search for a travel route. The route search module 400 is configured to notify the traffic flow control system 100 of information on an alternative route in a case where the user cannot use his or her planned route. The route search module 400 may be configured as a part of the traffic flow control system 100, or as a part of the operation control system 300.

The traffic flow control system 100 is also coupled to a traffic control system 350, a management system 360 for a bus operator, and a management system 370 for a taxi operator via a network (e.g., LAN). The traffic control system 350 is a computer system configured to control traffic signs and traffic lights, and is managed by the police or an administrative body. The management system 360 is a computer system for managing bus operations by a bus operator. In this embodiment, the management system 360 receives a request for an extra bus. The management system 370 is a computer system for managing taxi operations by a taxi operator. In this embodiment, the management system 370 receives a request to dispatch a taxi.

In this embodiment, in a case where the same operator operates a railroad, buses, and taxis, the operation control system 300, the management system 360 for a bus operator, and the management system 370 for a taxi operator may be configured as a single system. Those systems 300, 360, and 370 may also be integrated with the traffic flow control system 100 to form a single system.

The traffic flow control system 100 and the traffic control system 350 may also be configured as a single system.

FIG. 2 is a block diagram for illustrating a physical configuration of the traffic flow control system 100 according to the first embodiment.

The traffic flow control system 100 according to this embodiment is constructed by a computer system including the processor (central processing unit (CPU)) 101, the memory 102, the storage apparatus 103, and a communication interface 104.

The processor 101 is configured to execute programs stored in the memory 102. The memory 102 includes a read-only memory (ROM), which is a non-volatile storage element, and a random-access memory (RAM), which is a volatile storage element. The ROM is configured to store, for example, programs that do not change (e.g., basic input/output system (BIOS)). The RAM is a high-speed, volatile storage element, for example, a dynamic random access memory (DRAM), which is configured to temporarily store programs to be executed by the processor 101 and data to be used during execution of the programs.

The storage apparatus 103 is a large capacity, non-volatile storage apparatus such as a magnetic storage apparatus (hard disk drive (HDD)) or a flash memory (solid state drive (SSD)). The storage apparatus 103 is configured to store programs to be executed by the processor 101 and data (e.g., map data) to be used during execution of the programs. The programs are read from the storage apparatus 103, loaded into the memory 102, and executed by the processor 101.

The traffic flow control system 100 may include an input interface 105 and an output interface 108. The input interface 105, which is coupled to a keyboard 106 and a mouse 107, for example, is configured to receive input from the user. The output interface 108, which is coupled to a display apparatus 109 and a printer, for example, is configured to output an execution result of a program in a format that is viewable by the user.

The communication interface 104 is a network interface apparatus configured to control communication to and from another apparatus in accordance with a predetermined protocol.

The programs to be executed by the processor 101 are provided to the traffic flow control system 100 via a removable medium (e.g., compact disc (CD)-ROM, flash memory, etc.) or a network, and are stored in the non-volatile storage apparatus 103, which is a non-transitory storage medium. Therefore, it is preferred that the traffic flow control system 100 also include an interface configured to read data from the removable medium.

The traffic flow control system 100 according to the first embodiment is a computer system that is physically configured on one computer or that is configured on a plurality of logical or physical computers. The traffic flow control system 100 may be configured to operate in separate threads on the same computer, or to operate on a virtual computer constructed on a plurality of physical computer resources.

FIG. 3 is a diagram for illustrating an example of a configuration of the shop information 150 according to the first embodiment.

The shop information 150 is a table in which information on a shop to serve as a waiting location to which the user is to be guided by the traffic flow control system 100 is recorded. The shop information 150 includes a shop name 151 field, a category 152 field, an included amenity 153 field, a required time 154 field, a coupon 155 field, a usage count 156 field, and a unit price 157 field.

The shop name 151 indicates the name of the shop to serve as a waiting location to which the user is to be guided. The category 152 indicates the type of the shop. The included amenity 153 indicates the amenities that can be used by the user at the shop, for example, WiFi, an alternating-current (AC) power supply (commercial power supply), and a direct-current (DC) power supply (universal serial bus (USB)-standard 5 V). The required time 154 indicates the time required to travel from the shop to the station. The coupon 155 indicates a special deal to be provided to the user at the shop.

The usage count 156 indicates the number of times the shop has been used by users introduced to the shop by the traffic flow control system 100. The usage count 156 is used as billing information for the shop. The billing information is described later. The unit price 157 indicates a billing amount per time when the shop has been used by users introduced by the traffic flow control system 100. The unit price 157 is determined in advance when the shop information is registered.

The shop information 150 includes one table per station, but may also include a closest station field. Information on the shops (i.e., waiting locations) relating to all stations may also be registered in the shop information 150. In the shop information of this embodiment, commercial facilities (e.g., cafes, retailers, shopping malls, game arcades, etc.) providing products and services are registered, but public facilities (museums, art galleries, etc.) may also be registered. In other words, the shop information is not limited to shops, and information on various facilities may be registered in the shop information 150.

FIG. 4 is a diagram for illustrating an example of a configuration of the trouble information 160 according to the first embodiment.

The trouble information 160 includes trouble identification (ID) 161 field, a duration until restoration 162 field, and an affected station 163 field. Information on the trouble (e.g., delay, cancellation, etc.) that has occurred is acquired from the operation control system 300 and registered in the trouble information 160.

The trouble ID 161 indicates identification information for uniquely identifying the trouble that has occurred in the transportation facility. The duration until restoration 162 is a value of the expected duration required for recovery from the trouble. The affected station 163 is a list of stations affected by the trouble (e.g., stations in a section in which operation has been suspended).

FIG. 5 is a diagram for illustrating an example of a configuration of the restoration information 170 according to the first embodiment.

The restoration information 170 includes trouble ID 171 field and a restoration time 172 field. Information on restoration from the trouble is acquired from the operation control system 300 and recorded in the restoration information 170.

The trouble ID 171 indicates identification information for uniquely identifying the trouble that has occurred in the transportation facility. The restoration time 172 indicates the time at which the trouble is to be recovered from. In a case where the restoration time 172 is a time in the past, this indicates that restoration from the trouble has already occurred. In a case where the restoration time 172 is a time in the future, this indicates that the restoration from the trouble is yet to occur.

FIG. 6 is a diagram for illustrating an example of a configuration of the user waiting information 180 according to the first embodiment.

The user waiting information 180 is information on a user guided to a waiting location by the traffic flow control system 100. The user waiting information 180 includes trouble ID 181 field, a user ID 182 field, a shop name 183 field, a restoration notification condition 184 field, and a required time 185 field.

The trouble ID 181 indicates identification information for uniquely identifying the trouble that has occurred in the transportation facility. The user ID 182 indicates identification information for uniquely identifying the user of the traffic flow control system 100. The shop name 183 indicates the name of the shop that the user has been guided to and is waiting at by the traffic flow control system 100. The restoration notification condition 184 indicates a condition, which is input from the user terminal 200, relating to a restoration notification. As the restoration notification condition 184, "avoid crowding" or "prioritize time" is set. A waiting time after restoration from the trouble may also be set as a value in the restoration notification condition 184. The required time 185 indicates the time required for the user waiting at the shop to travel to the station.

FIG. 7 is a diagram for illustrating an example of a configuration of the destination information and waiting condition 190 according to the first embodiment.

The destination information and waiting condition 190 is a table in which selection conditions of the destination and the waiting location input from the user terminal 200 are recorded. The destination information and waiting condition 190 includes a user ID 191 field, a departure location 192 field, an arrival location 193 field, an urgency degree 194 field, a taste 195 field, a waiting amenity condition 196 field, and a restoration notification condition 197 field.

The user ID 191 indicates identification information for uniquely identifying the user who has input the selection conditions of the destination and the waiting location. The departure location 192 indicates a departure location of the travel by the user. The arrival location 193 indicates an arrival location of the travel by the user. The urgency degree 194 indicates the urgency degree of the travel by the user. The urgency degree 194 is set to "high" or "low". The urgency degree 194 is used in order to judge whether or not to present a waiting location or a detour route when trouble has occurred in the transportation facility. The taste 195 indicates the type of waiting location to be introduced to the user. The waiting amenity condition 196 indicates the amenities that can be used by the user at the waiting location to be introduced to the user. The restoration notification condition 197 indicates a condition for notifying the user of restoration from the trouble.

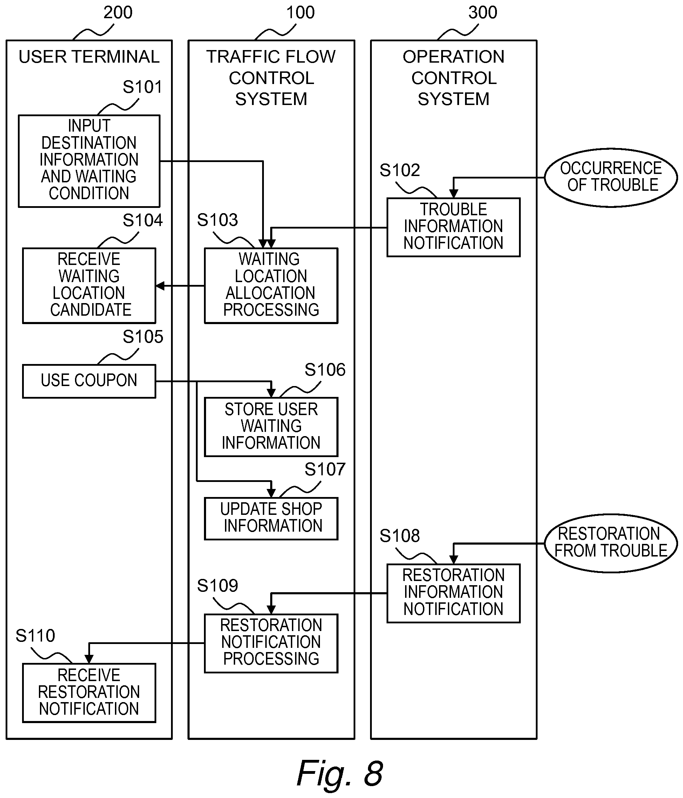

FIG. 8 is a sequence diagram for illustrating processing executed by the traffic flow control system 100 according to the first embodiment.

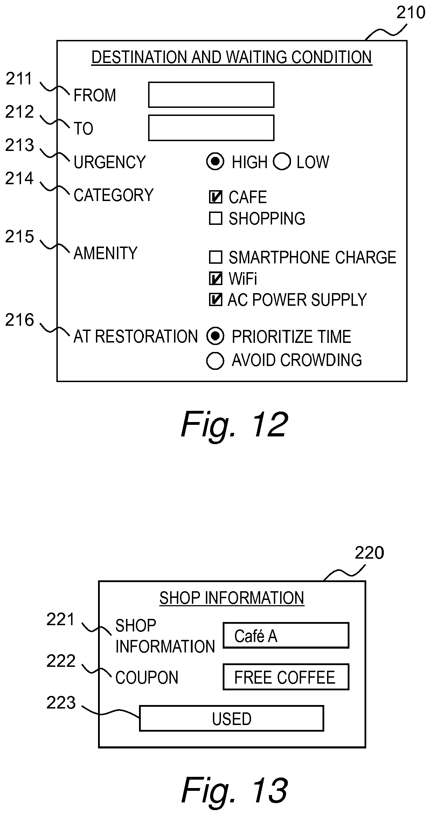

First, the user accesses the traffic flow control system 100 through use of the user terminal 200, and inputs destination information and a waiting condition (S101). The destination information and the waiting condition may be input before trouble has occurred in the transportation facility (e.g., when boarding), or after the trouble has occurred. An example of a destination and waiting condition input screen 210 for inputting the destination and waiting condition with the user terminal 200 is described later with reference to FIG. 12.

In a case where the operation control system 300 detects that trouble has occurred in the transportation facility, the operation control system 300 notifies the traffic flow control system 100 of the trouble information (S102). The trouble information notified to the traffic flow control system 100 from the operation control system 300 includes information on the trouble ID, the duration until restoration, and the affected stations.

The traffic flow control system 100 stores the trouble information received from the operation control system 300 in the trouble information 160, selects a waiting location suited to the user waiting for restoration from the trouble at an affected station (S103), and notifies the user terminal 200 of the selected waiting location candidate. The waiting location candidate notified to the user terminal 200 includes information on the trouble ID, and the shop name and a coupon of the waiting location. Waiting location assignment processing for selecting the waiting location is described in more detail later with reference to FIG. 9.

In a case where the user terminal 200 receives the waiting location candidate from the traffic flow control system 100, the user terminal 200 displays the received waiting location candidate on a shop information notification screen 220 (S104). An example of the shop information notification screen 220 is described later with reference to FIG. 13.

In a case where a "used" button 223 on the shop information notification screen 220 displayed on the user terminal 200 is pressed, the user terminal 200 transmits coupon usage information to the traffic flow control system 100 (S105). The "used" button 223 may be pressed by the user or by a shop staff member when the screen is presented to him/her by the user. When the shop staff member presses the "used" button 223, the shop staff member may input a passcode determined for each shop. In a case where the position of the user terminal 200 and the position of the shop match within a predetermined margin of error, the user may be judged as having used the shop. In a case where using position information, the judgment may be performed based on whether or not a signal from a beacon installed in the shop has been received. The user may also be judged as having used the shop based on communication between near field communication means (e.g., non-contact integrated chip (IC) reader, Bluetooth, etc.) installed in the shop and the user terminal 200.

The coupon usage information transmitted to the traffic flow control system 100 from the user terminal 200 includes information on the trouble ID, the user ID, and the shop name. The trouble ID and the shop name are transmitted to the traffic flow control system 100 by the user terminal 200 sending back the identification information included in the waiting location candidate transmitted by the traffic flow control system 100. For the user ID, the identification information held by the user terminal 200 is transmitted.

In a case where the traffic flow control system 100 receives the coupon usage information, the traffic flow control system 100 stores a record of the user in the user waiting information (S106). Specifically, the trouble ID, the user ID, and the shop name included in the coupon usage information transmitted from the user terminal 200 are stored in the trouble ID 181, the user ID 182, and the shop name 183, respectively, of the user waiting information 180. Then, the restoration notification condition 197 for that user ID is acquired from the destination information and waiting condition 190, and is stored in the restoration notification condition 184 of the user waiting information 180. The required time 154 for that shop is acquired from the shop information 150, and stored in the required time 185 of the user waiting information 180.

In a case where the traffic flow control system 100 receives the coupon usage information, the traffic flow control system 100 updates the shop information 150 by adding 1 to the usage count 156 (S107). The usage count 156 of the shop information 150 is counted at a predetermined timing, and is used as billing information.

Then, in a case where restoration from the trouble has occurred, the operation control system 300 notifies the traffic flow control system 100 of restoration from the trouble (S108). The restoration information notified to the traffic flow control system 100 from the operation control system 300 includes the trouble ID and the restoration time.

The traffic flow control system 100 stores the restoration information notification received from the operation control system 300 in the restoration information 170, and transmits a restoration notification to the user terminal 200 of the relevant user (S109). The restoration notification transmitted to the user terminal 200 from the traffic flow control system 100 includes information on the trouble ID and the restoration time.

In a case where the user terminal 200 receives the restoration notification from the traffic flow control system 100, the user terminal 200 displays the restoration information (S110). Specifically, the user terminal 200 may display the fact that restoration from the traffic trouble has occurred (e.g., "Accident recovery complete." or "Operation resumed at 16:00."), display the expected restoration time for the traffic trouble (e.g., "Operation expected to be resumed at 16:00."), or display the time for departing the shop. The user sees the restoration information displayed on the user terminal 200, and can determine the time at which he or she is to travel to the station from the waiting location.

FIG. 9 is a flowchart for illustrating the details of the waiting location assignment processing according to the first embodiment (Step S103 of FIG. 8).

The processing of Steps S121 to S127 is repeated for each affected station X.

First, among the users at an affected station X, the data of users having a departure point and an arrival point included in the affected station X is selected from the destination information and waiting condition 190 (S121). The users at the affected station X can be identified based on the current position of the users and entry/exit records. The current position of the users can be acquired by using a positioning method that uses a positioning device such as a global positioning system (GPS) or a coupled base station. For example, regarding the traffic trouble in the first line of the trouble information 160, a comparison of the data of each user in the destination information and waiting condition 190 indicates that there are three users having the departure point 192 and the arrival point 193 included in the affected station 163, namely, the users having the user IDs 1002, 1003, and 1004.

Whether or not the affected station is included in a standard route between the departure location and the arrival location may be judged by issuing an inquiry to the route search module 400. Further, the data of users only having the arrival location included in the affected station may also be extracted from the destination information and waiting condition 190.

The processing from Steps S122 to S127 is repeated for each piece of selected data.

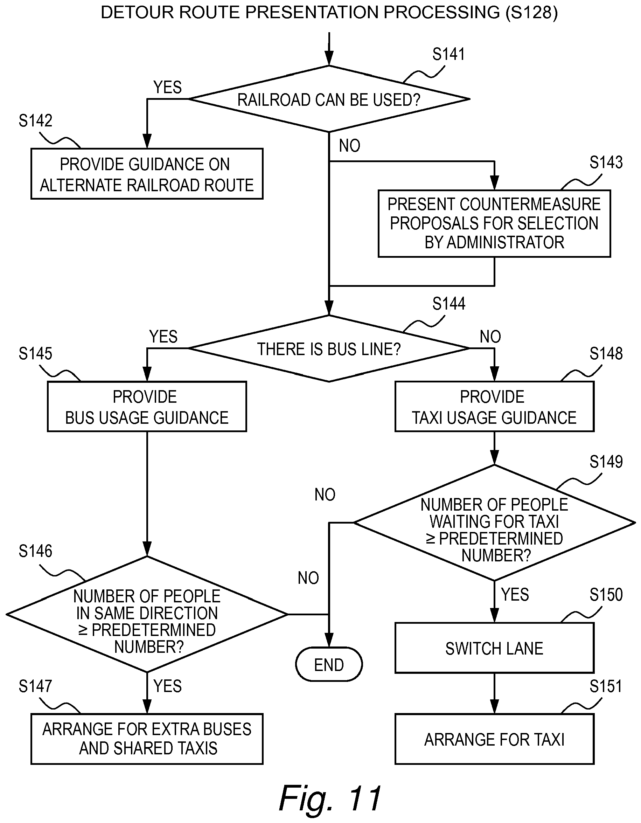

First, the traffic flow control system 100 judges whether or not the urgency degree 194 of the extracted data is "high" or "low" (S122). In a case where the urgency degree 194 is "high", this means that the user is in a hurry, and hence a detour route is presented (S128). The detour route presentation processing is described later with reference to FIG. 11.

Next, the processing branches into two based on the taste 195 (S123). In a case where the taste 195 is "cafe", waiting locations having "cafe" as the category 152 of the shop information 150 are extracted from the shop information 150 (S124), and the processing advances to Step S126. On the other hand, in a case where the taste 195 is "shopping", waiting locations having "shopping" as the category 152 of the shop information 150 are extracted from the shop information 150 (S125), and the processing advances to Step S126.

In this case, the processing advances to the processing step matching the taste. However, in a case where the taste is classified into many items, an item that is similar to the taste may be selected. In a case where there is no match with the taste, an item that is similar to the taste may be selected.

In Step S126, the traffic flow control system 100 selects a waiting location having the included amenity 153 of the shop information 150 satisfying the waiting amenity condition 196 of the destination information and waiting condition 190.

In the processing from Steps S122 to S126, the waiting location is selected by using three conditions, namely, the urgency degree, the taste, and the included amenity. However, the waiting location may be selected by using one or more of the urgency degree, the taste, and the included amenity.

Next, the traffic flow control system 100 notifies the information on the selected waiting location (S127). The waiting location candidate notified to the user terminal 200 from the traffic flow control system 100 includes information on the trouble ID, and the shop name and the coupon of the waiting location. The trouble ID is acquired from the trouble ID 161 of the trouble information 160. The shop name of the waiting location is the shop name 151 extracted in Step S126, and the coupon is the coupon 155 of that shop.

In principle, the traffic flow control system 100 is configured to notify one waiting location, but the traffic flow control system 100 may be configured to notify a plurality of waiting locations. In this case, the plurality of waiting locations may be displayed in order of closeness to the current position (e.g., station) of the user, or in the form of a descending list of suitability to the preference of the user. For users having a restoration notification condition 197 of the destination information and waiting condition 190 of "prioritize time", a waiting location close (e.g., within 3 minutes) to the current position may be assigned. For users having a restoration notification condition 197 of "avoid crowding", a waiting location distant from the current position may be assigned.

Information on a plurality of coupons may be recorded in the shop information 150 for every shop, and a suitable coupon may be selected based on a user attribute (e.g., age, gender, occupation, past usage history, etc.).

FIG. 10 is a flowchart for illustrating the details of the restoration notification processing according to the first embodiment (Step S109 of FIG. 8).

First, information on the user(s) matching the trouble ID of the restoration information notification received from the operation control system 300 is selected from the user waiting information 180 (S131).

The processing of Steps S132 to S137 is repeated for each selected user.

First, a value obtained by subtracting the required time 185 of the user waiting information 180 from the restoration time 172 of the restoration information 170 is set as a notification time T (S132).

Then, the traffic flow control system 100 judges whether or not the restoration notification condition 184 of the user waiting information 180 is "avoid crowding" (S133). In a case where the restoration notification condition 184 is "avoid crowding", in order to recommend boarding after the crowding that occurs immediately after restoration from the transportation facility trouble has died down, a predetermined time (in this example, 30 minutes) is added to the notification time T calculated in Step S132 (S134). The time to be added in Step S134 is not limited to 30 minutes. The time may be set in accordance with the state of crowding (number of users waiting at each station), or may be a time set by the user.

Then, the traffic flow control system 100 judges whether or not the notification time T is earlier than the current time (S135). In a case where the notification time T is earlier than the current time, the restoration notification is immediately transmitted to the user terminal 200 (S137). On the other hand, in a case where the notification time T is after the current time, the restoration notification is transmitted at the time T (S136).

Even for users having the restoration notification condition 184 set to "avoid crowding", the restoration notification may be transmitted to immediately notify the users of a recommended time for leaving the waiting locations.

FIG. 11 is a flowchart of the detour route presentation processing (S128 of FIG. 9) according to the first embodiment.

First, the current position and the arrival location of the user are acquired. The current position of the user can be acquired by a positioning method that uses a positioning device such as a GPS included in the user terminal 200 or a coupled base station. The arrival location is acquired from the destination information and waiting condition 190. The traffic flow control system 100 also judges whether or not a detour route by railroad can be used to travel from the current position of the user to the arrival location by issuing an inquiry to the route search module 400 (S141). For example, in a case where a detour route retrieved by the route search module 400 under the condition of using only railroads is less than twice the normal travel time, the traffic flow control system 100 may judge that a detour route by railroad can be used.

In a case where a detour route by railroad can be used to travel from the current position of the user to the arrival location, guidance on the detour route by railroad is provided (S142).

Next, the traffic flow control system 100 judges whether or not a detour route including a bus line can be used to travel from the current position of the user to the arrival location by issuing an inquiry to the route search module 400 (S144). For example, in a case where a detour route retrieved by the route search module 400 under the condition of using railroads and buses is less than twice the normal travel time, the traffic flow control system 100 may judge that there is a bus line.

Before judging the presence/absence of a bus line, processing may be executed for presenting countermeasure proposals to an administrator, and receiving the countermeasure proposal selected by the administrator (S143).

In a case where there is a bus line, bus usage guidance for the detour route acquired from the route search module 400 is transmitted to the user terminal 200 (S145). For example, guidance is provided on the bus stop from which the bus line to be used departs, the bus fare, and the travel time by bus for the detour route.

Then, the traffic flow control system 100 judges whether or not the number of people to board the detour route in the same direction is equal to or more than a predetermined number (S146). The number of people to board the detour route in the same direction may be calculated by referring to the destination information and waiting condition 190 and, among the users having the same arrival location, summing the number of people whose user terminal 200 the restoration notification was transmitted to, by sensing the number of people from an image taken at the bus stop, or by calculating the number of people based on a simulation. In a case where an extra bus is to be arranged, tickets may be distributed to the user terminal 200 of users who have applied to board the extra bus.

In a case where the number of people to board the detour route in the same direction is equal to or more than the predetermined number, an extra bus is arranged, or a shared taxi is arranged (S147). For example, a request is issued to the operation management system of the bus operator to arrange for an extra bus, or a request is issued to the operation management system of the taxi operator to arrange for a shared taxi.

On the other hand, in a case where it is judged in Step S144 that there is no bus line, taxi usage guidance is transmitted to the user terminal 200 (S148). For example, guidance is provided on the taxi stand and the travel time by taxi.

Then, the traffic flow control system 100 judges whether or not the number of people waiting for a taxi is equal to or more than a predetermined number (S149). In a case where the number of people waiting for a taxi is equal to or more than the predetermined number, a request is issued to the traffic control system 350 to change the display of traffic signs in order to switch a bus lane to a taxi lane, and a traffic regulation is changed to increase the number of taxi stands (S150).

Then, a request is issued to the operation management system of the taxi operator to arrange for a taxi (S151). As a result, the taxi operator can dispatch a taxi for which a customer is reliably expected. When only nearby taxis are dispatched, traffic jams in the surrounding roads can be avoided because taxis are not coming from far away.

FIG. 12 is a diagram for illustrating an example of the destination and waiting condition input screen 210 according to the first embodiment.

The destination and waiting condition input screen 210 includes a departure location input field 211, an arrival location input field 212, an urgency degree selection field 213, a category selection field 214, an amenity condition selection field 215, and a condition selection field at restoration 216. The traffic flow control system 100 is configured to record data input on the destination and waiting condition input screen 210 in the destination information and waiting condition 190.

The departure location from which the user is traveling is input to the departure location input field 211, and the arrival location to which the user is traveling is input to the arrival location input field 212. The data input to the departure location input field 211 is registered in the departure location 192 of the destination information and waiting condition 190, and the data input to the arrival location input field 212 is registered in the arrival location 193 of the destination information and waiting condition 190.

In the urgency degree selection field 213, "high" or "low" is selected. The selected data is registered in the urgency degree 194 of the destination information and waiting condition 190. In the category selection field 214, the waiting location categories selectable by the user may be selected. In the example illustrated in FIG. 12, one or more of "cafe" and "shopping" may be selected, but those categories may be classified into even more detail, or another category may be provided as an option. The data selected in the category selection field 214 is registered in the taste 195 of the destination information and waiting condition 190.

In the amenity condition selection field 215, a condition for the amenities that can be used by a user at the waiting location introduced to the user is selected. The selected data is registered in the waiting amenity condition 196 of the destination information and waiting condition 190. In the example illustrated in FIG. 12, one or more of "smartphone charging", "WiFi", and "AC power supply" can be selected.

In the condition selection field at restoration 216, a condition for notifying the user of restoration from the trouble is selected. The selected data is registered in the restoration notification condition 197 of the destination information and waiting condition 190. In the example illustrated in FIG. 12, "prioritize time" and "avoid crowding" can be selected. In a case where "avoid crowding" is selected, input of a time for transmitting a notification to the user may be requested.

The user may select at least one of the urgency degree, the category, and the amenity condition. Items not selected by the user become null data in the destination information and waiting condition 190.

FIG. 13 is a diagram for illustrating an example of the shop information notification screen 220 according to the first embodiment.

The shop information notification screen 220 includes the "used" button 223, and display fields for shop information 221 and a coupon 222.

The shop information 221 indicates information on the shop matching a condition input by the user (e.g., shop name). A hyperlink to detailed shop information (e.g., map, contact details, reservation screen, etc.) may be included in the shop name. The coupon 222 is for displaying the content of a coupon to be provided to the user. The coupon 222 may include a hyperlink to detailed information on a special deal.

The "used" button 223 is operated by the user or a shop staff member in a case where the user has received the benefits of the coupon.

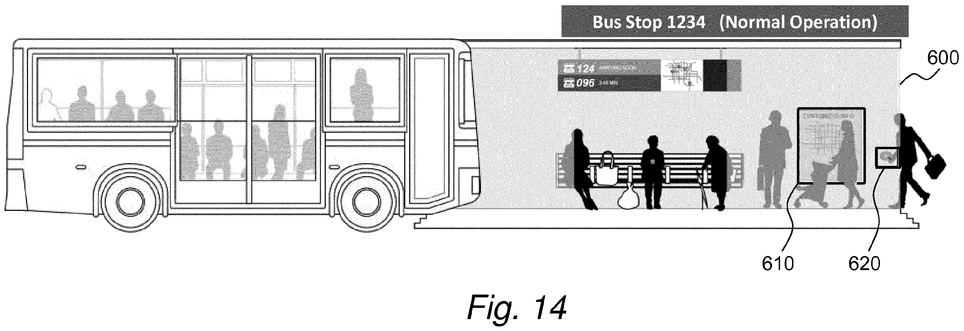

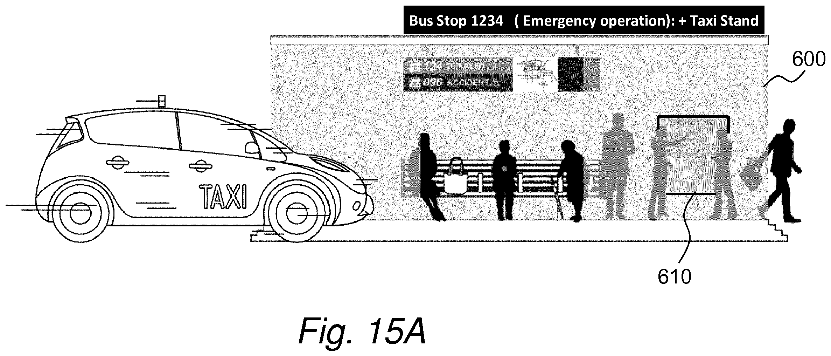

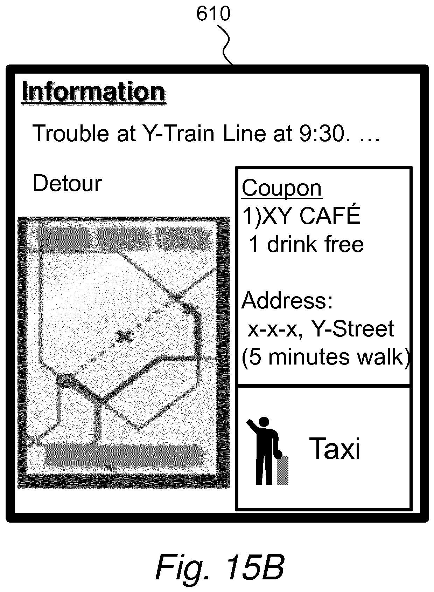

FIG. 14, FIG. 15A, and FIG. 15B are each a schematic diagram of a bus stop according to the first embodiment.

In FIG. 14, there is illustrated a bus stop 600 during normal operation (i.e., normal mode). As illustrated in FIG. 14, a signage apparatus 610 having a large display screen is installed at the bus stop 600. During normal operation, bus arrival and departure information and bus line information are provided on the signage apparatus 610. A check-in terminal 620 is also installed at the bus stop 600. The check-in terminal 620 can be used to purchase a ticket for the bus to be boarded and to issue the purchased bus ticket. The bus stop, which has a roof and walls, forms a space that is enclosed except for a side facing where buses arrive and depart from. An air conditioner is provided in the bus stop.

In FIG. 15A and FIG. 15B, the bus stop 600 is illustrated when trouble has occurred (i.e., during incident mode). As illustrated in FIG. 15A, in an incident mode, the bus stop is changed into a taxi stand. Therefore, the installed signage apparatus 610 displays useful guidance when trouble has occurred. For example, the signage apparatus 610 may display boarding guidance on the taxi, the required time by taxi, and the taxi fare. The signage apparatus 610 may also display guidance on shared taxis. As illustrated in FIG. 15B, the signage apparatus 610 may be configured to display guidance on transportation means (e.g., rental cycles) other than buses and taxis.

As described above, according to the first embodiment of this invention, the traffic flow control system 100 is configured to receive an operation state of a transportation facility, select a waiting location suited to the user by referring to the destination information and waiting condition 190, and transmit information on the selected waiting location to the user terminal 200. Therefore, a utilization rate of the traffic flow control system 100 by the users of the transportation facility can be increased by selecting a waiting location suited to the taste of each user, and crowding in and around the station can be reduced. Further, user dissatisfaction can be resolved by providing information required by the user.

In the above-mentioned operation management system described in JP 2006-4100 A, information in accordance with the intention of the user is distributed to the terminal, but the distribution method thereof is not described. Also, in the operation management system disclosed in JP 2006-4100 A, there is no consideration given to the urgency degree of the travel by the user. In general, the user of the transportation facility inputs the urgency degree of travel in a route search before boarding. Therefore, the system can use that information to send appropriate notifications to the user to be issued without requiring confirmation of the intention of the user again when an accident has occurred.

The user taste recorded in the destination information and waiting condition 190 is not something that frequently changes. Therefore, inputting the user taste before a transportation facility trouble occurs enables appropriate notifications to be issued without asking the user for his or her intention every time trouble occurs.

In a case where the traffic flow control system 100 receives information on the trouble that has occurred in the transportation facility, the traffic flow control system 100 selects a waiting location suited to the user, and transmits information on the selected waiting location to the user terminal 200. As a result, the users of the transportation facility are dispersed, which enables crowding in and around the station to be reduced.

In a case where the traffic flow control system 100 receives information on restoration from the trouble, restoration from the trouble is notified to the user terminal 200. As a result, the user can learn of restoration from the trouble, which is convenient.

The traffic flow control system 100 is configured to determine the time for transmitting information on restoration from the trouble in accordance with the required time for travel from the waiting location of the user to the station. This enables the user to arrive at the station at just the right time in accordance with the waiting location, which allows crowding in the station to be reduced. Specifically, the user can board the train that he or she wants to board (i.e., a train that arrives at his or her intended destination early even when it is crowded, or a train after crowding has decreased) by leaving the waiting location and heading toward the station after seeing the restoration information notification.

The traffic flow control system 100 is configured to transmit, in a case where the user wants to travel by avoiding crowding, information on restoration from the trouble after a predetermined time has elapsed since restoration from the trouble in the transportation facility. This enables the user to use the transportation facility in an uncrowded time period.

The traffic flow control system 100 is configured to select a waiting location suited to the user in accordance with at least one of the urgency degree, the type of waiting location, and the amenity condition of the waiting location. Therefore, a waiting location matching the preference of the user can be selected, which enables user convenience and the utilization rate of the traffic flow control system 100 to be increased.

The traffic flow control system 100 is configured to provide guidance on a detour route to users having a high urgency degree of travel, and to select a waiting location for users having a low urgency degree of travel. As a result, appropriate guidance can be provided even to users who are in a hurry. In other words, normally, the user of the transportation facility inputs the urgency degree of travel in the route search before boarding, and hence when that information is used, it is not necessary to confirm the intention of the user again when an accident has occurred. In the traffic flow control system 100 according to the first embodiment, information is provided to the user by using information input before boarding the transportation facility, and hence appropriate information can be provided to the user without requiring confirmation of the intention of the user again when an accident has occurred.

The traffic flow control system 100 is configured to transmit to the user terminal 200 a coupon that can be used by the user at the waiting location. This enables an incentive to use the waiting location to be given to the user, and hence the waiting location can increase the number of customers.

The traffic flow control system 100 is configured to generate billing information for the waiting location in accordance with the coupon usage state. The billing information can be used as revenue for the operator of the traffic flow control system 100.

The traffic flow control system 100 is configured to arrange for an extra bus in a case where the section in which the traffic trouble has occurred can be travelled by bus, and the number of people travelling in the same direction is equal to or more than a predetermined number. As a result, bus stop crowding is reduced, and the users can arrive at their intended destination quickly. Further, the bus operator can operate an extra bus for which customers are reliably expected.

The traffic flow control system 100 is configured to arrange for a taxi in a case where the number of people waiting for a taxi is equal to or more than a predetermined number. As a result, taxi stand crowding is reduced, and the users can arrive at their intended destination quickly. Further, the taxi operator can dispatch a taxi for which a customer is reliably expected.

The traffic flow control system 100 is configured to switch a bus stop to a taxi stand by issuing a request to the traffic management system to change a bus stop traffic regulation to allow entry by taxis. This enables the number of taxis pools to be increased, and more taxis to depart in a short period of time. As a result, crowding in and around the station is reduced, and the users can arrive at their intended destination quickly.

The traffic flow control system 100 is also configured to issue a request to the taxi operator management system to arrange for a nearby taxi. This enables taxis to be dispatched without causing traffic jams in the surrounding roads.

### <Second Embodiment>

Next, a second embodiment of this invention is described.

In the second embodiment, the traffic flow control system 100 is configured to collect a plurality of pieces of information, and to create a countermeasure for controlling the traffic flow based on at least one of real-time information or information understood in advance. In the second embodiment, the traffic flow control system 100 is positioned as a sub-system of the operation control system 300, but the operation control system 300 may also be configured to execute the processing described below itself.

In the second embodiment, the same configurations and processes as those of the first embodiment are denoted by like reference symbols, and a description thereof is omitted.

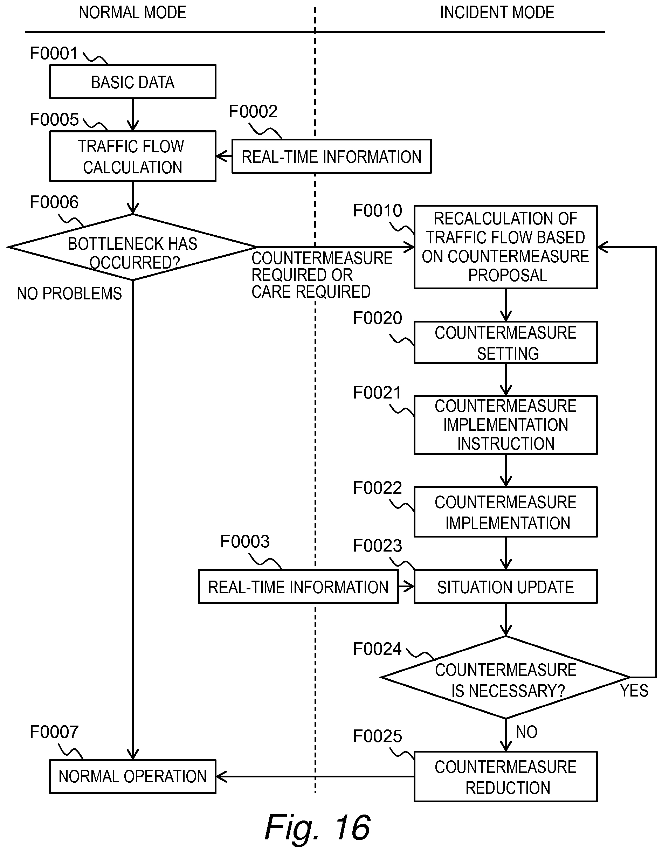

FIG. 16 is a sequence diagram for illustrating basic processing according to the second embodiment.

First, the traffic flow control system 100 acquires basic data (F0001). The basic data is information on an event planned in advance (e.g., an exhibition or a concert with a large number of attendees).

Next, the traffic flow control system 100 acquires real time traffic operation information from the operation control system 300 (F0002), and calculates the traffic flow by using the acquired basic data and real-time information (F0005). The calculation of the traffic flow is repeated at a predetermined timing (e.g., at predetermined time intervals). The calculated traffic flow may be displayed on the display apparatus 109 of the traffic flow control system 100, or made available to general users on a Web site.

Then, it is judged whether or not a bottleneck has occurred in the calculated traffic flow based on whether or not the number of people in a predetermined area exceeds a predetermined threshold (F0006). In a case where a bottleneck has not occurred, this means that there are no problems, and hence normal operation is performed without taking any action (F0007).

On the other hand, for example, in a case where a bottleneck has occurred, or in a case where care is required because a bottleneck is predicted to occur, the traffic flow control system 100 judges that a countermeasure against the bottleneck is required, and shifts to the incident mode. In the incident mode, a countermeasure is created in accordance with how the incident occurred. Specifically, the traffic flow control system 100 refers to a countermeasure determination standard 510 and selects the countermeasure to be taken in accordance with the incident situation (i.e., the severity, affected range, and urgency level).

Then, the traffic flow control system 100 simulates the traffic flow by applying the selected countermeasure (F0010), and presents the content of countermeasure proposal and the simulated traffic flow to the administrator. The administrator selects the countermeasure, sets the place on which the countermeasure is to be implemented (e.g., station, bus stop, waiting location, etc.) (F0020), and instructs the traffic flow control system 100 to implement the countermeasure (F0021). The traffic flow control system 100 transmits an implementation instruction for the countermeasure to the other systems coupled to the traffic flow control system 100 to implement the countermeasure (F0022). Examples of the countermeasure implementation instruction include the following.
(1) Arrangement for extra temporary bus
(2) Arrangement for taxi operator to dispatch taxi
(3) Switching from bus stop to taxi stand
(4) Issuance of coupon urging use of nearby facilities
(5) Distribution of video and product guidance, in which waiting user shows interest, to surrounding signage apparatus

Then, the traffic flow control system 100 acquires the real time operation information (F0003), updates the situation (F0023), and judges whether or not it is necessary to continue the countermeasure (F0024). In a case where it is necessary to continue the countermeasure, the processing is returned to Step F0010, and the traffic flow is calculated again by using the real-time information acquired in Step F0003.

On the other hand, in a case where it is judged that the bottleneck has been resolved and the countermeasure may be ended, the traffic flow control system 100 gradually reduces the countermeasure (F0025). The countermeasure may also be ended immediately.

After the countermeasure has been completely ended, the traffic flow control system 100 returns to normal mode, and performs normal operation (F0007).

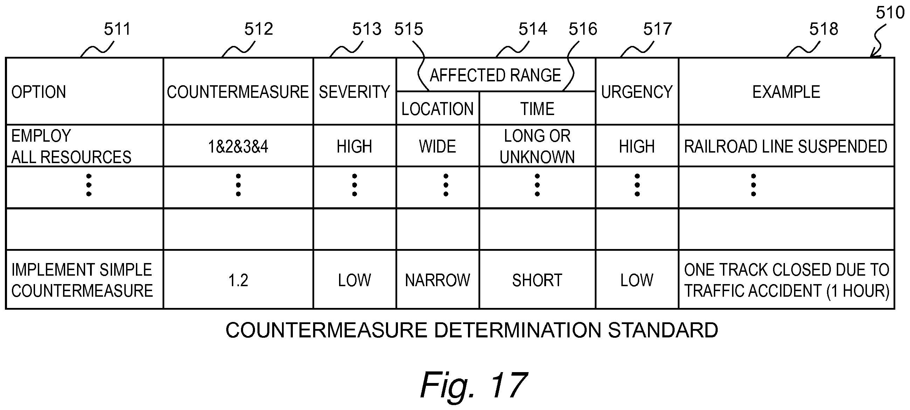

FIG. 17 is a diagram for illustrating an example of the countermeasure determination standard 510 matching the incident situation according to the second embodiment.

The countermeasure determination standard 510 is a standard that is used in order to determine the countermeasure to be taken in accordance with the incident situation. The countermeasure determination standard 510 is stored in the memory 102 of the traffic flow control system 100. The countermeasure determination standard 510 includes an option 511 field, a countermeasure 512 field, a severity 513 field, an affected range 514 field, and an urgency level 517 field. The affected range 514 includes a location 515 field and a time 516 field. The countermeasure determination standard 510 may also include an example 518 field representing a specific incident as an arbitrary item.

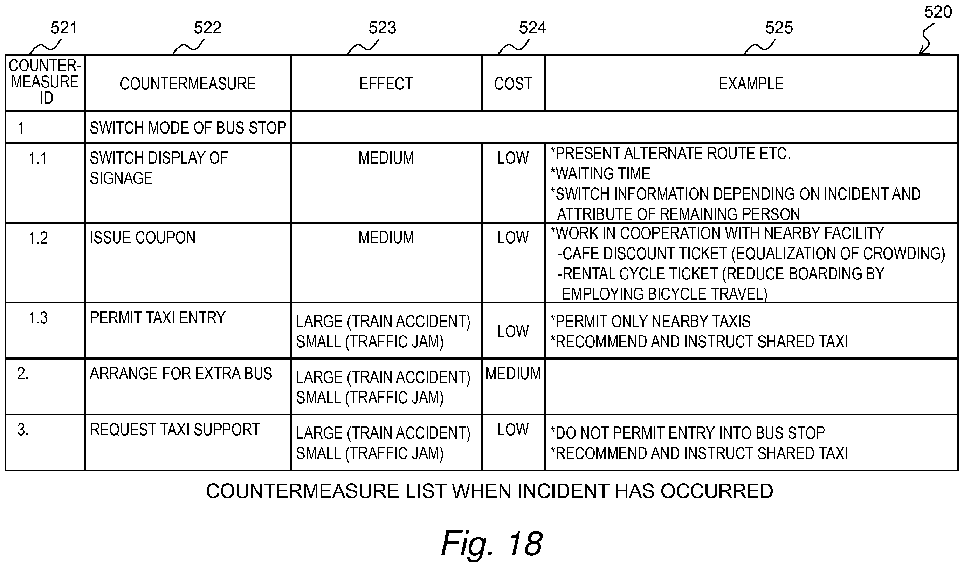

The option 511 indicates the name of a countermeasure group to be selected. The countermeasure 512 indicates an identifier of the countermeasure to be selected. The countermeasure identifier is defined in a countermeasure list 520 shown in FIG. 18. The severity 513 indicates the severity of the incident that is occurring or that is predicted to occur. The severity 513 can be calculated based on, for example, the number of people who are to be affected, or an amount of economic loss caused by the incident. The affected range (location) 515 indicates whether or not the impact of the incident extends over a wide range. The affected range (time) 516 indicates whether or not the impact of the incident extends for a long time. The urgency level 517 indicates whether or not the countermeasure for the incident needs to be taken quickly. For example, in a case where a chaotic situation is expected to occur due to a sudden increase in the number of people affected by the incident and waiting at the station, the urgency level can be determined to be high.

FIG. 18 is a diagram for illustrating an example of the countermeasure list 520 according to the second embodiment.

In the countermeasure list 520, the countermeasures to be implemented when an incident occurs are defined. The countermeasure list 520 is stored in the memory 102 of the traffic flow control system 100.

The countermeasure list 520 includes a countermeasure ID 521 field, a countermeasure 522 field, an effect 523 field, and a cost 524 field. The countermeasure list 520 may also include an example 525 field representing specific content of a countermeasure as an arbitrary item.

The countermeasure ID 521 indicates identification information for uniquely identifying the countermeasure. The countermeasures are hierarchically defined by the countermeasure ID 521. For example, in a case where the countermeasure having the countermeasure ID "1" (switch mode of bus stop) is specified, the countermeasure having the countermeasure ID 1.1 (switch display of signage apparatus), the countermeasure having the countermeasure ID 1.2 (issue coupon), and the countermeasure having the countermeasure ID 1.3 (permit taxi entry) are performed.

The countermeasure 522 indicates the name of the countermeasure and an outline of that countermeasure. The effect 523 indicates the effect of the countermeasure. The effect 523 may have a different effect depending on the type of incident. The cost 524 indicates the cost of the countermeasure.

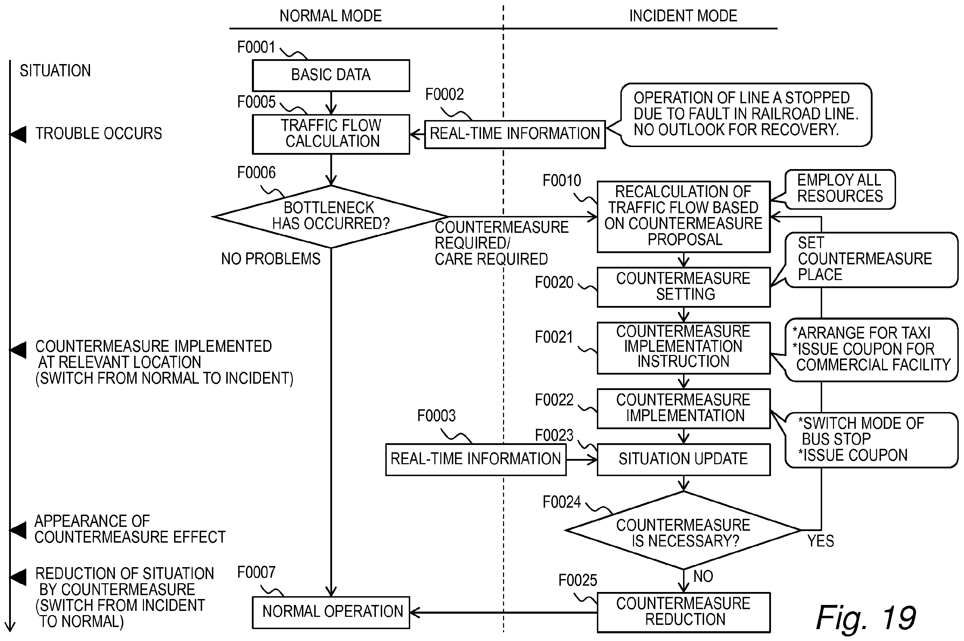

FIG. 19 is a sequence diagram for illustrating an example of the specific processing performed when trouble has occurred in the transportation facility according to the second embodiment.

In the case illustrated in FIG. 19, the real-time information acquired in Step F0002 indicates that operation of a line A has been stopped due to trouble in the railroad line, and that there is no outlook for recovery.

As a result, a bottleneck occurs in the calculated traffic flow, and the severity of the incident is "high", the affected range (location) is "widespread", the affected range (time) is "unknown", and the urgency level is "high". Based on the countermeasure determination standard 510, it can be determined that all possible resources are to be employed for this incident to avoid a chaotic situation (F0010).

The administrator then sets the station on which the countermeasure is to be implemented (F0020), and instructs the traffic flow control system 100 to implement the countermeasure (F0021). In a case where the traffic flow control system 100 receives the countermeasure implementation instruction from the administrator, the traffic flow control system 100 transmits an implementation instruction for the countermeasure to the other systems coupled to the traffic flow control system 100 to implement the countermeasure (F0022). The countermeasure to be implemented in this example is, for example, arranging for the dispatch of taxis by the management system 370 for a taxi operator to reduce the number of people waiting for a taxi. Therefore, the traffic flow control system 100 issues a request to the management system 360 for a bus operator to switch the mode of the bus stop such that the bus stop is changed into a taxi stand. Further, the traffic flow control system 100 issues a request to the traffic control system 350 to switch the bus lane regulatory sign such that the sign is changed to allow taxis to enter the bus lane. In addition, for example, a coupon for a nearby commercial facility is issued to urge users to wait at the commercial facility.

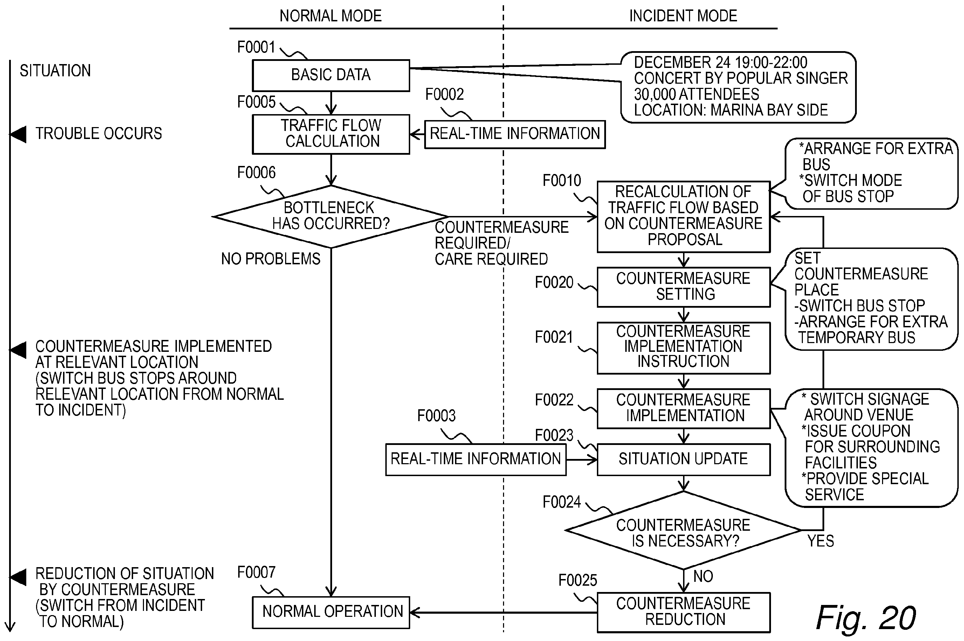

FIG. 20 is a sequence diagram for illustrating an example of the processing when an event occurs according to the second embodiment.

In the case illustrated in FIG. 20, an event is planned to be held. For example, the basic data acquired in Step F0001 indicates a concert at the Marina Bay Sands by a popular singer that 30,000 people are to attend. Therefore, the traffic flow is simulated in advance, and the real-time information is acquired in Step F0002 to calculate the traffic flow (F0005).

In the case of such a large-scale event, a traffic flow bottleneck occurs when the event ends. Therefore, the traffic flow control system 100 refers to the countermeasure determination standard 510, selects a countermeasure proposal, and calculates the traffic flow for the selected countermeasure (F0010). At this time, extra buses and switch of the bus stop mode are presented to the administrator as countermeasure proposals.

The administrator selects the content of the countermeasure, sets the bus stop on which the countermeasure is to be implemented (F0020), and instructs the traffic flow control system 100 to implement the countermeasure (F0021). In a case where the traffic flow control system 100 receives the countermeasure implementation instruction from the administrator, the traffic flow control system 100 transmits an implementation instruction for the countermeasure to the other systems coupled to the traffic flow control system 100, and implements the countermeasure (F0022). The countermeasure to be implemented in this example is, for example, arranging for the management system 360 for a bus operator to arrange for temporary buses in order to reduce the number of people waiting for a bus. Therefore, the traffic flow control system 100 issues a request to the management system 360 for a bus operator to switch the mode of the bus stop such that more temporary buses can depart from the bus stop. Further, the traffic flow control system 100 issues a request to the traffic control system 350 to switch the bus lane regulatory sign such that the sign is changed to allow more buses to depart from the bus lane.

The users waiting for a bus can be entertained by, for example, switching the display of the signage apparatus around the venue to show a promotional video of the singer. Information on a product related to the singer or information useful to the users remaining around the venue may also be provided by switching the display of the signage apparatus around the venue. A coupon for a nearby commercial facility may be issued in order to urge the users to remain in a nearby facility after the concert has ended. As a special service, a photo opportunity with the singer may be provided to spread out the times for boarding the buses.

As described above, according to the second embodiment of this invention, countermeasures for controlling a traffic flow can be implemented in order to deal with various incidents. In particular, the traffic flow can be controlled by avoiding a chaotic situation caused by an event planned in advance or an unexpectedly occurring traffic trouble.

This invention is not limited to the above-mentioned embodiments, and encompasses various modification examples and the equivalent configurations within the spirit of the appended claims. For example, a case in which trouble has occurred in a railroad has been described in the embodiments above, however this invention may also be applied to other transportation facilities (e.g., buses). This invention may also be applied to a case of causing users to wait or to take a detour route due to a traffic trouble (e.g., accident or traffic jam) occurring on an expressway.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, processing modules, and processing means, for all or a part of them, may be implemented by hardware: for example, by designing an integrated circuit, and may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrate control lines and information lines as considered necessary for explanation but do not illustrate all control lines or information lines in the products. It can be considered that almost of all components are actually interconnected.

## Claims

1. A traffic flow control system (100), which is configured to provide information to a user of a transportation facility, the traffic flow control system comprising:
a processor (101) configured to execute a program;
a memory (102) accessible by the processor; and
a communication interface (104) coupled to the processor,
**characterized in that** the memory is configured to hold a waiting condition (190) in which a condition for selecting a waiting location for the user is recorded, and
the processor is configured to:
select a waiting location suited to the user by referring to the waiting condition in a case of receiving information on trouble that has occurred in the transportation facility (S103);
urge the user to wait by transmitting information on the selected waiting location to a terminal of the user (S127);
determine a time for transmitting the information on restoration from the trouble in accordance with a required time of travel from the waiting location of the user to a station in a case of receiving information on restoration from the trouble that has occurred in the transportation facility (S109); and
transmit a notification of the information on restoration from the trouble to the terminal of the user at the determined time (S136, S137).

2. The traffic flow control system according to claim 1,
wherein the waiting condition (190) includes information on a mode of travel by the user when restoration from the trouble in the transportation facility occurs (194), and
wherein the processor is configured to transmit the information on restoration from the trouble after a predetermined time has elapsed since the restoration from the trouble in the transportation facility in a case where the user wants to travel by avoiding crowding (S134).

3. The traffic flow control system according to claim 1,
wherein the waiting condition (190) includes at least one of an urgency degree of travel (194), a type of the waiting location (195), and a condition for an amenity included in the waiting location (196), which are input by the user, and
wherein the processor is configured to select the waiting location suited to the user in accordance with at least one of the urgency degree (194), the type of the waiting location (195), and the condition for an amenity (196).

4. The traffic flow control system according to claim 3, wherein the processor is configured to refer to the waiting condition (190) to select a waiting location for a user having a low urgency degree.

5. The traffic flow control system according to claim 1, wherein the processor is configured to:
judge whether or not a section in which the trouble has occurred is travelable by another transportation facility;
arrange for an extra bus in a case where the section is travelable by bus and a number of people to travel in the same direction is larger than a predetermined number (S147); and
arrange for a taxi in a case where the section is not travelable by bus and a number of people waiting for a taxi is larger than a predetermined number (S151).

6. The traffic flow control system according to claim 5, wherein the processor is configured to switch a bus stop to a taxi stand by requesting a traffic management system to change a traffic regulation of the bus stop to allow entry by a taxi (S150).

7. The traffic flow control system according to claim 6, wherein the processor is configured to request a management system of a taxi operator to arrange for a nearby taxi (S151).

8. The traffic flow control system according to claim 1, wherein the information on the waiting location to be transmitted to the terminal of the user includes information on a special deal to be received by the user at the waiting location (222).

9. The traffic flow control system according to claim 8, wherein the processor is configured to generate billing information for the waiting location in a case where the user uses the special deal at the waiting location.

10. A traffic flow control method, which is executed by an information provision system (100) configured to provide information to a user of a transportation facility,
the information provision system including:
a processor (101) configured to execute a program;
a memory (102) accessible by the processor; and
a communication interface (103) coupled to the processor,
the memory being configured to hold a waiting condition (190) in which a condition for selecting a waiting location for the user is recorded,
**characterized in that** the traffic flow control method comprises steps of:
selecting, by the processor a waiting location suited to the user by referring to the waiting condition in a case of receiving information on trouble that has occurred in the transportation facility (S103);
urging, by the processor, the user to wait by transmitting information on the selected waiting location to a terminal of the user (S127);
determining, by the processor a time for transmitting the information on restoration from the trouble in accordance with a required time from the waiting location of the user to a station in a case of receiving information on restoration from the trouble that has occurred in the transportation facility (S109); and
transmit, by the processor, a notification of the information on restoration from the trouble to the terminal of the user at the determined time (S136, S137).
